# EUROPÄISCHE PATENTSCHRIFT

(11) **EP 0 338 132 B1**
(45) Veröffentlichungstag und Bekanntmachung des Hinweises auf die Patenterteilung: **02.03.1994**
(21) Anmeldenummer: 88121278.1
(22) Anmeldetag: 20.12.1988
(51) Int. Cl.: B23Q 1/02, B21D 43/00

(54) **Koordinatentisch**
Alignment table
Table d'alignement

(30) Priorität: 16.04.1988 DE 8805081 U
(43) Veröffentlichungstag der Anmeldung: 25.10.1989
(73) Patentinhaber: C. Behrens AG, D-31041 Alfeld/Leine (DE)
(72) Erfinder: Degner, Helmut, Dipl.-Ing., D-3220 Alfeld (Leine) (DE)
(74) Vertreter: Sobisch, Peter, Dipl.-Ing.

(56) Entgegenhaltungen:
- EP-A- 0 094 927
- GB-A- 2 186 224
- US-A- 3 181 858
- US-A- 3 425 687
- US-A- 3 848 495
- US-A- 3 981 605

## Beschreibung

Die Erfindung bezieht sich auf einen Koordinatentisch entsprechend dem Oberbegriff des Anspruchs 1.

Koordinatentische für Stanzmaschinen sind grundsätzlich bekannt. Sie dienen der Zuführung der zu bearbeitenden Werkstücke, z.B. Blechplatinen zur Arbeitsstation der Stanzmaschine und sind demzufolge mit Werkstückauflageflächen versehen, die relativ zu der Stanzmaschine verfahrbar sind.
Es besteht zu diesem Zweck der Koordinatentisch aus einem Unterwagen, der in der einen Richtung verfahrbar ist und einen Oberwagen trägt, der wiederum in der anderen Richtung verfahrbar ist. Der Koordinatentisch wirkt hierbei mit CNC-gesteuerten Antriebseinrichtungen zusammen, welche eine genaue Positionierung ermöglichen.

Es ist der Oberwagen darüber hinaus mit Spannwerkzeugen versehen, welche der Erfassung des auf diesem aufliegenden Werkstücks dienen.

Da während der Handhabung der Werkstücke Relativbewegungen zwischen diesen und den Werkstückauflageflächen entstehen, haben letztere in vielen Fällen eine besondere Ausgestaltung mit Hinblick auf die Verminderung von Reibung erfahren. So ist es beispielsweise bekannt, im Rahmen der Werkstückauflagefläche das Werkstück auf Kugelrollen aufzulagern, wodurch eine gewisse Verbesserung erreicht werden kann. Bei empfindlichen Blechqualitäten hingegen, insbesondere dann, wenn das Blech mit Durchzügen, Ausschnitten und dergleichen versehen ist, liegt dieses nicht mehr auf allen Kugelrollen auf, so daß deren Führungswirkung verschlechtert wird. Hinzukommt, daß bei Verschmutzung die Kugeln in ihrer Rollbewegung gehemmt werden und ihrerseits zur Ursache von Schleifspuren auf den Werkstücken werden. Ein weiteres Problem bei der Auflagerung auf Kugelrollen betrifft die Erfassung der aufliegenden Werkstücke durch Spanneinrichtungen. Hierzu müssen üblicherweise die Kugelrollen absenkbar ausgebildet sein.

Aus der EP-0 094 927 A1 ist ein Koordinatentisch bekannt, dessen Werkstückauflagefläche aus einem Mittelteil und jeweils einem Seitenteil beiderseits des ersteren besteht. Der Koordinatentisch dient der Positionierung plattenartiger Werkstücke relativ zu einer, dem Mittelteil zugeordneten Werkzeugmaschine. Zur Positionierung dient eine Werkstückspanneinrichtung, welche mit zur Erfassung des Werkstücks bestimmten Spannzangen ausgerüstet ist und relativ zu der Werstücksauflagefläche in zwei, zueinander senkrechten Richtungen verschiebbar angeordnet ist. Die Werkstückauflagefläche wird durch eine Nebeneinanderanordnung von jeweils das Mittelteil und die beiden Seitenteile definierenden Leisten gebildet, aus deren Oberflächen in gleichmäßiger Verteilung Stützkugeln herausragen, die in ihrer Gesamtheit die Werkstückauflageebene bilden. Um eine Bewegung der Werkstückspanneinrichtung, insbesondere der Spannzangen über die Werkstückauflagefläche zu ermöglichen sind die die Stützkugeln tragenden Leisten absenkbar ausgebildet und es ist die Absenkbewegung kinematisch mit der Bewegung der Werkstückspanneinrichtung verknüpft. Die absenkbare Anordnung der Leisten in Verbindung mit den notwendigen Steuerungselementen für die Realisierung der Absenkbewegung stellt jedoch eine relativ komplizierte Lösung dar.

Aus der US-A 3 425 687 ist eine Fördereinrichtung für plattenartige, vor mechanischen Beschädigungen zu schützende Werkstücke bekannt, wobei die Werkstückauflageebene durch Borsten gebildet wird, die in Förderrichtung nach Art eines Fischgrätenmusters, somit streifenartig angeordnet sind. In einem ersten Teil der Förderstrecke werden die Werkstücke durch einen, bezüglich der Förderstrecke zentral geführten, die Rückseite des Werkstücks erfassenden Schieber und im zweiten Teil der Förderstrecke durch eine wiederum zentral geführte, an der Vorderseite des Werkstücks angreifende Spannzange gefördert. Der Endpunkt der Förderstrecke wird durch ein System von Anschlägen, Endschaltern sowie der genauen Positionierung dienenden Querschiebern bestimmt und es dient dieser Endpunkt der Erfassung des Werkstücks durch ein weiteres Fördermittel. Der Verschiebeweg sowohl des erstgenannten Schiebers als auch derjenige der Spannzange verläuft in einem, eine zentrale Ausnehmung des Fischgrätenmusters bildenden Bereich der Werkstückauflageebene. Es handelt sich somit nicht um einen Koordinatentisch, bei welchem sich das Problem der beliebigen Positionierung eines Werkstücks innerhalb einer Horizontalebene stellt.

Es hat sich somit insgesamt gezeigt, daß die bisher bekannten Werkstückauflageflächen bei Koordinatentischen nicht allen Anforderungen gerecht werden, insbesondere bezüglich der Handhabbarkeit der Werkstücke, jedoch auch mit Hinblick auf die Vermeidung von Kratz- und Schleifspuren als Folge von Relativbewegungen gegenüber der Werkstückoberfläche, wobei diese Probleme verstärkt bei empfindlichen Blechqualitäten auftreten.

Es ist daher die Aufgabe der Erfindung, einen Koordinatentisch der eingangs bezeichneten Gattung zu entwerfen, der in einfacher Weise eine reibungsarme und beschädigungsfreie Handhabung von Werkstücken ermöglicht.

Gelöst ist diese Aufgabe bei einem gattungsgemäßen Koordinatentisch durch die Merkmale des Kennzeichnungsteils des Anspruchs 1.

Erfindungswesentlich ist, daß die Werkstückauflageebene durch eine Vielzahl von Borsten gebildet wird, deren Dichte und/oder werkstoffliche Beschaffenheit mit Hinblick auf die exakte Führung von Werkstücken gewählt sind. Die somit aus Kunststoff bestehenden Borsten unterliegen ihrerseits kaum einer Abnutzung und gewährleisten andererseits eine sichere Unterstützung der Werkstückunterseite, wobei insbesondere Beschädigungen als Folge von Relativbewegungen zwischen dem Werkstück und der auf diese Weise definierbaren Werkstückauflageebene vermieden werden. Ein weiterer Vorteil ergibt sich bei Handhabungsbewegungen mit den hier üblicherweise eingesetzten Spanneinrichtungen, welche der Erfassung des Werkstücks dienen. Diese können unter elastischer Verformung bzw. Verdrängung der Borsten an den Rand des Werkstücks geschoben werden und das Werkstück über die Werkstückauflageebene bewegen, so daß konstruktiv und steuerungstechnisch aufwendige Maßnahmen, wie beispielsweise das Absenken von Kugelrollen oder dergleichen aus der Werkstückauflageebene entfallen. Es sind besondere Leisten zur Befestigung der Borsten vorgesehen, so daß diese Borstenträger zu Reinigungs- und Austauschzwecken in einfacher Weise der Werkstückauflagefläche entnehmbar sind. Die Leisten sind in an sich beliebiger Weise an einem Rahmen befestigt. Diese Befestigung kann beispielsweise durch Schraubung, Klemmung oder in sonstiger, leicht lösbarer Weise erfolgen.

Die Merkmale der Ansprüche 2 und 3 sind auf vorteilhafte Ausgestaltungen der Art der Befestigung der Leisten an dem Rahmen gerichtet. Die Befestigung der Leisten erfolgt hierbei formschlüssig mittels U-förmiger Profile, die entweder unmittelbar ein Gestaltungselement des Rahmens bilden oder durch besondere Schienen gebildet werden, die ihrerseits an dem Rahmen befestigt sind. In jedem Fall sind die Leisten mittels dieser Schienen allseitig arretiert.

Die Erfindung wird im folgenden unter Bezugnahme auf das in den Zeichnungen dargestellte Ausführungsbeispiel näher erläutert werden. Es zeigen:
Fig. 1 eine perspektivische Ansicht eines erfindungsgemäßen Koordinatentisches, der einer Stanzmaschine zugeordnet ist;
Fig. 2 einen stark vergrößerten Ausschnitt der Konstruktion einer erfindungsgemäßen Werkstückaufnahmefläche.

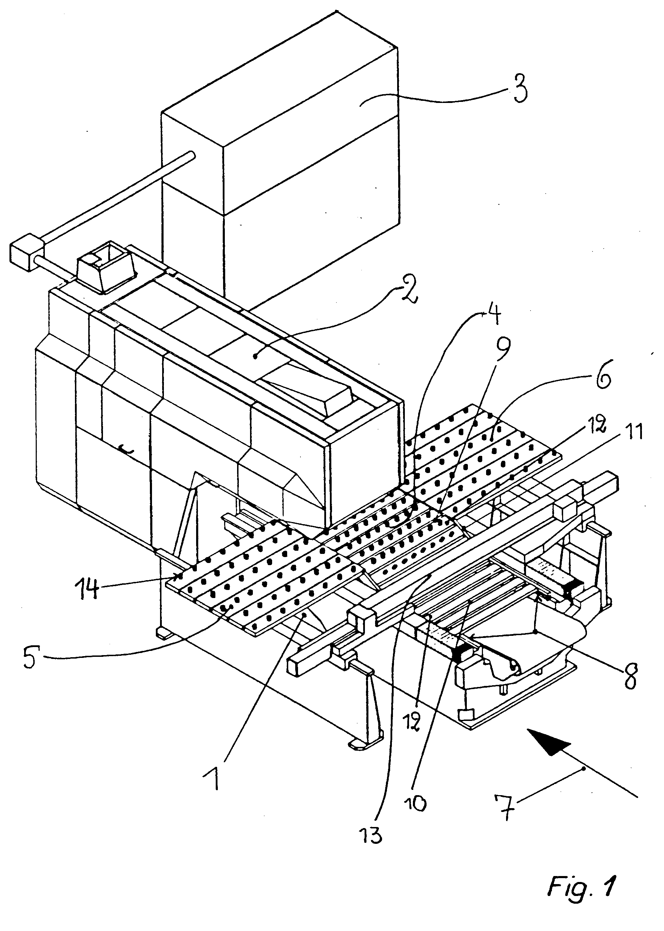

Mit 1 ist in Fig. 1 der erfindungsgemäße Koordinatentisch in seiner Gesamtheit bezeichnet, der hier einer Stanzmaschine 2 zugeordnet ist, welcher einen C-förmigen Grundkörper aufweist. Es ist die Stanzmaschine 2 zur Bearbeitung von Werkstücken unter anderem mittels eines Laserwerkzeugs ausgestattet, so daß dieser ein Lasergenerator 3 zugeordnet ist.

Der in Fig. 1 gezeigte Koordinatentisch 1 besteht im wesentlichen aus drei Teilflächen, nämlich einem Mittelteil 4 und seitlich an dieses angrenzend jeweils einem Seitenteil 5,6. Das Mittelteil 4 befindet sich hierbei - in Richtung des Pfeiles 7 gesehen - unmittelbar vor der Arbeitsstation der Stanzmaschine 2. Es sind die Seitenteile 5,6 in Richtung des Pfeiles 7 bzw. in Gegenrichtung zu diesem mittels zeichnerisch nicht mehr dargestellter Antriebsmittel verfahrbar.

Mit 8 sind an dem Koordinatentisch 1 befestigte, mit Abstand zueinander angeordnete und parallel zueinander verlaufende Schienen bezeichnet, die im wesentlichen in zwei, sich horizontal erstreckenden und zueinander parallel angeordneten Ebenen verlaufen. Es ist dies eine erste, mit der Arbeitsebene der Stanzmaschine 2 im wesentlichen übereinstimmende Ebene 9 und eine zweite, mit Abstand unterhalb der genannten Arbeitsebene plazierte Ebene 10. Die in beiden Ebenen 9,10 verlaufenden Abschnitte der Schienen 8 stehen über einen Schrägabschnitt 11 miteinander in Verbindung.

Die genannten Schienen 8 dienen der Führung des Mittelteils 4, welches aus einzelnen leistenartigen Segmenten 12 zusammengesetzt ist, deren jeweilige Endbereiche in diesen Schienen 8 aufgenommen sind. Die untereinander in Verbindung stehenden Segmente 12 sind an einem Ende an dem Maschinenrahmen der Stanzmaschine 2 befestigt. Bei einem Verfahren der Seitenteile 5,6 in Richtung des Pfeiles 7 werden demzufolge aufgrund der an die Bewegung des Koordinatentisches 1 gekoppelten Bewegung der Schienen 8 die Segmente 12 innerhalb der Schienen 8 bewegt und auf diese Weise teilweise aus einer Ebene 9, 10 in die jeweils andere Ebene nach Durchlaufen des Schrägabschnitts 11 überführt. Die Segmente 12 werden bei dieser Bewegung unterhalb eines, sich quer zu dem Pfeil 7 erstreckenden Balkens 13 des Koordinatentisches 1 hindurchbewegt. Zeichnerisch nicht dargestellt sind Spannwerkzeuge, mittels welchen das auf dem Koordinatentisch 1 aufliegende Werkstück in einer genauen Position gehalten bzw. in eine genaue Position überführt werden kann.

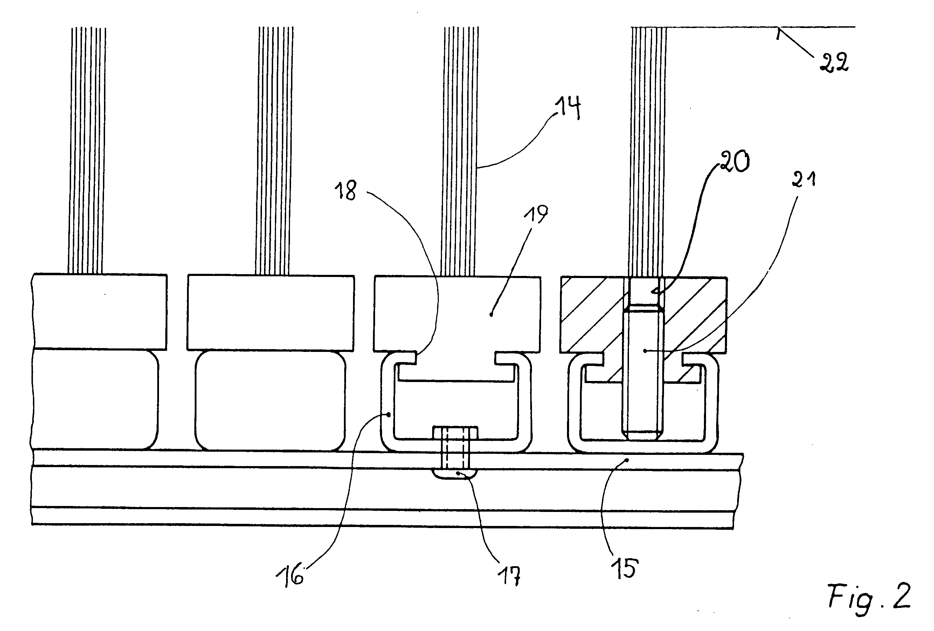

Sämtliche Werkstückauflageflächen des Koordinatentisches 1, und zwar sowohl der Seitenteile 5,6 als auch des Mittelteils sind in vorzugsweise gleichmäßiger Verteilung mit Borsten 14 überzogen. Die Borsten 14 sind werkstofflich von einer solchen Beschaffenheit und/oder in einer solchen Dichte angeordnet, daß zumindest das auf diesen auflagernde Werkstück keine nennenswerte Verformung derselben auslöst. Die genaue Anordnung und Anbringung der Borsten wird im folgenden unter Bezugnahme auf die Fig. 2 näher erläutert werden.

An einem Rahmen 15, welcher die Aufbaufläche für die Werkstückauflage bildet, sind eine Reihe von sich parallel zueinander erstreckenden, im Querschnitt U-förmigen Schienen 16 mittels mehrerer Verbindungselemente 17 angebracht, welch letztere durch Schrauben oder auch Niete gebildet werden können. Der Rahmen 15 kann hierbei - bezogen auf das Mittelteil 4 - beispielsweise durch die dort dargestellten Segmente 12 gebildet werden.

Die Seitenschenkel des U-förmigen Profils der Schienen 16 sind an ihren äußeren Enden radial einwärts gebogen, und zwar in eine parallel zur Ebene des Mittelteils des Profils verlaufende Ebene und dienen dem Eingriff in Nuten 18 von Leisten 19, welche auf diesem Wege in eine sich parallel zur Auflagefläche des Rahmens 15 erstreckenden Ebene gehalten werden. Die im übrigen im Querschnitt im wesentlichen rechteckig ausgebildeten Leisten tragen an ihrer Oberseite die genannten Borsten 14, welche jeweils in der Form von Borstenbündeln in geeigneter Weise an bzw. in diesen Leisten 19 befestigt sind.

Die Leisten sind mit einer Reihe von Gewindebohrungen 20 versehen, in welche jeweils Gewindestifte 21 eingesetzt sind, so daß die Leiste 19 gegenüber den Schienen 16 einspannbar ist und gegen ein unbeabsichtigtes Herauswandern aus den Schienen 16 gesichert ist.

Die Borsten 14 nebst der diesen zugeordneten, auf dem Rahmen 15 aufliegenden Unterstützungskonstruktion sind derart bemessen, daß die durch die Gesamtheit der Borsten 14 definierbare Werkstückauflageebene 22 sich im wesentlichen in der Höhe der Matrizenoberkante des in der Arbeitsstation der Stanzmaschine 2 befindlichen, im übrigen noch einen Stempel nebst Stenpelhalter umfassenden Werkzeugsatzes befindet.

Man erkennt aus der obigen Darstellung, daß das Werkstück bei dem erfindungsgemäßen Koordinatentisch lediglich auf einer Vielzahl von Borsten 14 aufliegt, wodurch ein beschädigungsfreies Verschieben desselben relativ zu dem Koordinatentisch möglich ist. Durch diese Borsten 14 wird eine zweckmäßige Unterstützung des Werkstücks auch dann gewährleistet, wenn dieses mit Durchzügen oder nach unten vorstehenden Prägungen versehen ist, da durch diese Verformungen weder die Unterstützung des Werkstücks beeinträchtigt noch die Werkstückauflage bei Verschiebungen gegenüber derselben beschädigt wird. Man erkennt ferner, daß aufgrund der Unterstützung des Werkstücks mittels der genannten Borsten ein problemloses Erfassen des Werkstücks mittels einer Spannzange oder einer sonstigen Spanneinrichtung möglich ist, da diese unter elastischer Verformung der einzelnen Borsten in diese eingeschoben werden kann, um einen Randbereich eines Werkstücks zu erfassen. Es ist auf diese Weise eine problemlose Verschiebung des Werkstücks in der jeweiligen Arbeitsebene, in der das Werkzeug der Stanzmaschine 2 wirksam ist, möglich.

## Patentansprüche

1. Koordinatentisch (1) für eine Stanzmaschine (2), bestehend zumindest aus einer, auf einem Gestell aufgelagerten Werkstückauflagefläche und einer, zur Erfassung und Verschiebung eines Werkstücks in der Werkstückauflageebene (22) bestimmten, bewegbar angeordneten Spanneinrichtung, dadurch gekennzeichnet,
- daß aus der Werkstückauflagefläche in vorzugsweise gleichmäßiger Verteilung Borsten (14) herausragen, deren Gesamtheit die Werkstückauflageebene (22) bildet,
- daß die Werkstückauflagefläche durch eine Nebeneinanderanordnung von lösbar an einem Rahmen (15) befestigten Leisten (19) gebildet wird,
- daß die Borsten (14) an oder in den Leisten (19) befestigt sind,
- daß die Borsten (14) aus einem Kunststoff bestehen und
- daß die Spanneinrichtung unter elastischer Verformung der Borsten (14) über die Werkstückauflagefläche bewegbar ist.

2. Koordinatentisch (1) nach Anspruch 1, dadurch gekennzeichnet, daß die Leisten (19) in im wesentlichen U-förmig gestaltete Aufnahmen des Rahmens (15) eingesteckt sind.

3. Koordinatentisch (1) nach Anspruch 2, dadurch gekennzeichnet, daß die U-förmig ausgestalteten Aufnahmen des Rahmens (15) durch entsprechend profilierte Schienen (16) gebildet werden, die an dem Rahmen (15) befestigt sind.

4. Koordinatentisch (1) nach einem der Ansprüche 1 bis 3, dadurch gekennzeichnet,
- daß mehrere Werkstückauflageflächen vorgesehen sind, und zwar ein Mittelteil (4) und beiderseits desselben Seitenteile (5,6),
- daß sämtliche Auflageflächen Borsten (14) tragen und
- daß zumindest die Seitenteile (5,6) verschiebbar auf dem Gestell aufgelagert sind.

5. Koordinatentisch (1) nach einem der Ansprüche 1 bis 3, dadurch gekennzeichnet,
- daß mehrere Werkstückauflageflächen vorgesehen sind, und zwar ein Mittelteil (4) und beiderseits desselben Seitenteile (5,6),
- daß sämtliche Werkstückauflageflächen Borsten (14) tragen und
- daß zumindest die Seitenteile (5,6) fest auf dem Gestell aufgelagert sind.

## Claims

1. Alignment table (1) for a stamping machine (2), consisting of a workpiece support surface supported on a stand and a movable clamping device intended for gripping and displacing a workpiece in the workpiece support plane (22), characterised in that
- bristles (14) project, preferably in uniform distribution, from the workpiece support surface and as a whole form the workpiece support plane (22),
- the workpiece support surface is formed by an arrangement of strips (19) side by side which are releasably fixed on a frame (15),
- the bristles (14) are fixed on or in the strips (19),
- the bristles (14) are made from a plastics material,
- the clamping device is movable over the workpiece support surface, resiliently deforming the bristles (14).

2. Alignment table (1) according to Claim 1, characterised in that the strips (19) are inserted into substantially U-shaped receptacles on the frame (15).

3. Alignment table (1) according to Claim 2, characterised in that the U-shaped receptacles on the frame (15) are formed by correspondingly profiled rails (16) fixed on the frame (15).

4. Alignment table (1) according to one of Claims 1 to 3, characterised in that
- a plurality of workpiece support surfaces are provided, namely a central part (4) and side parts (5, 6) on both sides thereof,
- all of the support surfaces bear bristles (14), and
- at least the side parts (5, 6) are movably supported on the stand.

5. Alignment table (1) according to one of Claims 1 to 3, characterised in that
- a plurality of workpiece support surfaces are provided, namely a central part (4) and side parts (5, 6) on both sides thereof,
- all of the support surfaces bear bristles (14), and
- at least the side parts (5, 6) are arranged fixed on the stand.

## Revendications

1. Table d'alignement (1) pour une poinçonneuse (2), constituée d'au moins une surface d'appui pour pièce à usiner, montée sur un châssis, et d'un dispositif de serrage mobile, servant à saisir et à faire déplacer une pièce à usiner dans le plan (22) d'appui pour pièce à usiner, caractérisée
- en ce que des soies (14) dépassent, suivant une répartition de préférence régulière, de la surface d'appui pour pièce à usiner, l'ensemble de ces soies formant le plan d'appui (22) pour pièce à usiner,
- en ce que la surface d'appui pour pièce à usiner est formée par la disposition les unes contre les autres de réglettes (19) fixées, de façon démontable, sur un cadre,
- en ce que les soies (14) sont fixées sur ou dans les réglettes (19),
- en ce que les soies (14) sont constituées de matière plastique, et
- en ce que le dispositif de serrage peut se déplacer sur la surface d'appui pour pièce à usiner en déformant élastiquement les soies (14).

2. Table d'alignement (1) suivant la revendication 1, caractérisée en ce que les réglettes (19) sont implantées dans des fixations, réalisées essentiellement en forme de U, du cadre (15).

3. Table d'alignement (1) suivant la revendication 2, caractérisée en ce que les fixations, réalisées en forme de U, du cadre (15) sont formées par des rails (16), ayant un profil approprié et qui sont fixés sur le cadre (15).

4. Table d'alignement (1) suivant l'une quelconque des revendications 1 à 3, caractérisée
- en ce que plusieurs surfaces d'appui pour pièce à usiner sont prévues, à savoir une pièce centrale (4) et, de part et d'autre de celle-ci, des pièces latérales (5, 6),
- en ce que les différentes surfaces d'appui portent des soies (14), et
- en ce qu'au moins les pièces latérales (5, 6) sont montées de façon à pouvoir coulisser sur le châssis.

5. Table d'alignement (1) suivant l'une quelconque des revendications 1 à 3, caractérisée
- en ce que plusieurs surfaces d'appui pour pièce à usiner sont prévues, à savoir une pièce centrale (4) et, de part et d'autre de celle-ci, des pièces latérales (5, 6),
- en ce que les différentes surfaces d'appui portent des soies (14), et
- en ce qu'au moins les pièces latérales (5, 6) sont montées fixes sur le châssis.
